# EUROPEAN PATENT APPLICATION

(11) **EP 4 811 645 A1**
(43) Date of publication of application: **23.09.2026**
(21) Application number: 25196564.6
(22) Date of filing: 19.08.2025
(51) Int. Cl.: H02P 21/22, H02P 29/024, H02P 29/032

(54) **POWER TOOL**

(30) Priority: 17.03.2025 CN 202510316048
(71) Applicant: Nanjing Chervon Industry Co., Ltd., Nanjing, Jiangsu 211106 (CN)
(72) Inventor: GUO, Zengbing, Nanjing, Jiangsu 211106 (CN); FENG, Jifeng, Nanjing, Jiangsu 211106 (CN)
(74) Representative: Sun, Yiming

(57) **Abstract**

A power tool includes a housing; a working head; an electric motor disposed in the housing and configured to drive the working head; a load detection unit configured to detect real-time load data of the power tool; and a controller electrically connected to at least the load detection unit. The controller is configured to acquire the real-time load data outputted by the load detection unit; generate an amplitude limiting parameter of a terminal voltage of the electric motor according to the real-time load data and a first load limit; and adjust the terminal voltage of the electric motor based on the amplitude limiting parameter of the terminal voltage of the electric motor.

## Description

### TECHNICAL FIELD

The present application relates to the technical field of electric motor control for power tools and, in particular, to an amplitude limiting method for a terminal voltage of an electric motor and a power tool.

### BACKGROUND

Under a large load condition, a power tool such as a mower, a chainsaw, or an electric drill is often easy to enter a protection mode to shut down during an overload, cannot operate normally, and affects user experience.

In addition, when an electric motor of the power tool brakes, to prevent a terminal voltage of the electric motor from rising, a three-phase short-circuit braking mode is typically adopted, and a braking force cannot be controlled.

This part provides background information related to the present application, and the background information is not necessarily the existing art.

### SUMMARY

An object of the present application is to solve or at least alleviate part or all of the preceding problems. To this end, an object of the present application is to provide an amplitude limiting method for a terminal voltage of an electric motor and a power tool so that the problem can be solved that a stall protection or an overcurrent protection is triggered by an excessively large actual bus current and thus the electric motor is caused to stop.

To achieve the preceding object, the present application adopts the technical solutions below.

An amplitude limiting method for a terminal voltage of an electric motor includes the steps described below. An actual bus current is acquired. An amplitude limiting parameter of the terminal voltage of the electric motor is determined according to the actual bus current and a first current threshold so that the actual bus current approaches the first current threshold. An amplitude limiting voltage of the terminal voltage of the electric motor is determined according to the amplitude limiting parameter of the terminal voltage of the electric motor, where the amplitude limiting voltage of the terminal voltage of the electric motor is used for limiting the terminal voltage of the electric motor.

In some examples, the amplitude limiting parameter of the terminal voltage of the electric motor includes at least one of an amplitude limiting coefficient of the terminal voltage of the electric motor, a reduction value of the terminal voltage of the electric motor, and an amplitude limiting value of the terminal voltage of the electric motor.

In some examples, the step where the amplitude limiting parameter of the terminal voltage of the electric motor is determined according to the actual bus current and the first current threshold includes: determining the amplitude limiting parameter of the terminal voltage of the electric motor according to the first current threshold and the actual bus current based on a first closed-loop control model.

In some examples, when the actual bus current is greater than the first current threshold, the amplitude limiting voltage of the terminal voltage of the electric motor determined according to the amplitude limiting parameter of the terminal voltage of the electric motor is less than the maximum allowable voltage of the terminal voltage of the electric motor. When the actual bus current is less than or equal to the first current threshold, the amplitude limiting voltage of the terminal voltage of the electric motor determined according to the amplitude limiting parameter of the terminal voltage of the electric motor is equal to the maximum allowable voltage of the terminal voltage of the electric motor.

In some examples, the amplitude limiting method for a terminal voltage of an electric motor further includes the following step: the acquisition of the amplitude limiting parameter of the terminal voltage of the electric motor is stopped when the actual bus current is less than a second current threshold, where the second current threshold is less than the first current threshold.

In some examples, the amplitude limiting voltage of the terminal voltage of the electric motor is U0, and the maximum allowable voltage of the terminal voltage of the electric motor is U1, where 10% * U1 ≤ U0 ≤ 100% * U1.

In some examples, the first current threshold is determined according to a control target of the electric motor.

In some examples, the first current threshold is less than a stall protection current, and/or the first current threshold is less than an overcurrent protection current.

A power tool includes a housing, a working head, an electric motor, a current detection unit, and a controller. The electric motor is disposed in the housing and configured to drive the working head. The current detection unit is configured to detect an actual bus current. The controller is electrically connected to at least the current detection unit. The controller is configured to: determine a target bus current according to a control target of the electric motor; generate a target voltage of a terminal of the electric motor based on the target bus current; determine an amplitude limiting voltage of a terminal voltage of the electric motor according to the target bus current and the actual bus current supplied by the current detection unit; and output a smaller one of the amplitude limiting voltage of the terminal voltage of the electric motor and the target voltage of the terminal of the electric motor.

In some examples, the controller is further configured to: generate a first current threshold according to the target bus current, where the first current threshold is greater than or equal to the target bus current; and determine the amplitude limiting voltage of the terminal voltage of the electric motor so as to cause the actual bus current to approach the first current threshold.

In some examples, the controller is further configured to: adjust an amplitude limiting parameter of the terminal voltage of the electric motor so as to cause the actual bus current to approach the first current threshold; and determine the amplitude limiting voltage of the terminal voltage of the electric motor according to the amplitude limiting parameter of the terminal voltage of the electric motor and a maximum allowable voltage of the terminal voltage of the electric motor.

A power tool includes a housing, a working head, an electric motor, a load detection unit, and a controller. The electric motor is disposed in the housing and configured to drive the working head. The load detection unit is configured to detect real-time load data of the power tool. The controller is electrically connected to at least the load detection unit. The controller is configured to: acquire the real-time load data outputted by the load detection unit; generate an amplitude limiting parameter of a terminal voltage of the electric motor according to the real-time load data and a first load limit; and adjust the terminal voltage of the electric motor based on the amplitude limiting parameter of the terminal voltage of the electric motor.

In some examples, the load detection unit includes at least one of a bus current detection unit, a temperature detection unit, a rotational speed detection unit, and a power detection unit.

In some examples, the load detection unit includes a bus current detection unit configured to detect an actual bus current. The controller is further configured to: acquire the actual bus current outputted by the bus current detection unit; and determine the amplitude limiting parameter of the terminal voltage of the electric motor according to the actual bus current and a first current threshold so as to cause the actual bus current to approach the first current threshold.

In some examples, the controller is further configured to: determine an amplitude limiting voltage of the terminal voltage of the electric motor according to the amplitude limiting parameter of the terminal voltage of the electric motor; and adjust the terminal voltage of the electric motor to cause the terminal voltage of the electric motor to be less than or equal to the amplitude limiting voltage.

In some examples, the controller is further configured to: generate an amplitude limiting parameter of the terminal voltage of the electric motor according to the difference between the real-time load data and the first load limit when the real-time load data exceeds the first load limit.

In some examples, the controller is further configured to stop generating the amplitude limiting parameter of the terminal voltage of the electric motor when the real-time load data is lower than a second load limit. The second load limit is less than the first load limit.

In some examples, the first load limit is determined according to a stall protection load value and/or an overcurrent protection load value.

An amplitude limiting method for a braking current of an electric motor includes the steps described below. An actual bus voltage is acquired in a braking process of the electric motor. An amplitude limiting parameter of the braking current is determined according to the actual bus voltage and a first voltage threshold, where the first voltage threshold is determined according to an actual power supply voltage of a power supply of the electric motor. An amplitude limiting current of the braking current is determined according to the amplitude limiting parameter of the braking current, where the amplitude limiting current of the braking current is used for limiting the braking current of the electric motor.

In some examples, the amplitude limiting parameter of the braking current includes at least one of an amplitude limiting coefficient of the braking current, a reduction value of the braking current, and an amplitude limiting value of the braking current.

In some examples, the step where the amplitude limiting parameter of the braking current is determined according to the actual bus voltage and the first voltage threshold includes: determining the amplitude limiting parameter of the braking current according to the actual bus voltage and the first voltage threshold based on a second closed-loop control model so as to cause the actual bus voltage to approach the first voltage threshold.

In some examples, the actual power supply voltage of the power supply of the electric motor is V1, and the first voltage threshold is V2, where 0.8 * V1 ≤ V2 ≤ 1.3 *V1.

In some examples, at the same actual bus voltage, a power of the electric motor is positively correlated with the maximum amplitude of the braking current.

A power tool includes a housing, a working head, an electric motor, a voltage detection unit, and a controller. The electric motor is disposed in the housing and configured to drive the working head. The voltage detection unit is configured to detect an actual bus voltage. The controller is configured to: determine an amplitude limiting current of a braking current according to the actual bus voltage outputted by the voltage detection unit and a first voltage threshold, where the first voltage threshold is determined according to the rated power supply voltage of a power supply of the electric motor; and set a braking torque of the electric motor based on the amplitude limiting current of the braking current.

In some examples, the controller is further configured to: acquire the actual bus voltage; determine an amplitude limiting parameter of the braking current according to the actual bus voltage and the first voltage threshold; and determine the amplitude limiting current of the braking current according to the amplitude limiting parameter of the braking current.

In some examples, the controller is further configured to: determine a target braking current according to a braking control target; adjust the target braking current according to the amplitude limiting current of the braking current when the target braking current exceeds the amplitude limiting current of the braking current; and set the braking torque of the electric motor based on the adjusted target braking current.

In some examples, the controller is further configured to: acquire a setting instruction about a target braking gear and determine, according to the setting instruction, a target braking current corresponding to the target braking gear; and determine the braking torque of the electric motor based on the amplitude limiting current of the braking current and the target braking current.

In some examples, the controller is further configured to: determine a smaller one of the amplitude limiting current of the braking current and the target braking current as the amplitude limiting value of the current; limit the braking current of the electric motor according to the amplitude limiting value of the current; and set the braking torque of the electric motor based on the limited braking current.

The present application has the benefits below. After the actual bus current is acquired, the amplitude limiting parameter of the terminal voltage of the electric motor is determined according to the actual bus current and the first current threshold, and then the amplitude limiting voltage of the terminal voltage of the electric motor is determined according to the amplitude limiting parameter of the terminal voltage of the electric motor. Thus, the terminal voltage of the electric motor can be limited through the amplitude limiting voltage when the electric motor is controlled to run. On one hand, the probability can be reduced that the electric motor is damaged due to an excessively high terminal voltage of the electric motor. On the other hand, when the electric motor is controlled to run, the actual bus current of the electric motor can be caused, through the control of the amplitude limiting voltage, to approach the first current threshold. Thus, the actual bus current is not excessively large, and the probability is reduced that the stall protection or the overcurrent protection is triggered by an excessively large actual bus current and thus the electric motor is caused to stop, thereby helping improve the user experience.

### BRIEF DESCRIPTION OF DRAWINGS

FIG. 1 is a structural diagram of an electric motor control system according to the present application.
FIG. 2 is a flowchart of an amplitude limiting method for a terminal voltage of an electric motor according to the present application.
FIG. 3 is another flowchart of the amplitude limiting method for a terminal voltage of an electric motor according to the present application.
FIG. 4 is another structural diagram of an electric motor control system according to the present application.
FIG. 5 is a structural view of a power tool according to the present application.
FIG. 6 is a flowchart of an electric motor control method in a controller.
FIG. 7 is another flowchart of an electric motor control method in a controller.
FIG. 8 is a flowchart of an amplitude limiting method for a braking current of an electric motor according to the present application.
FIG. 9 is another structural diagram of an electric motor control system according to the present application.
FIG. 10 is a flowchart of an amplitude limiting method for a braking current of an electric motor according to the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

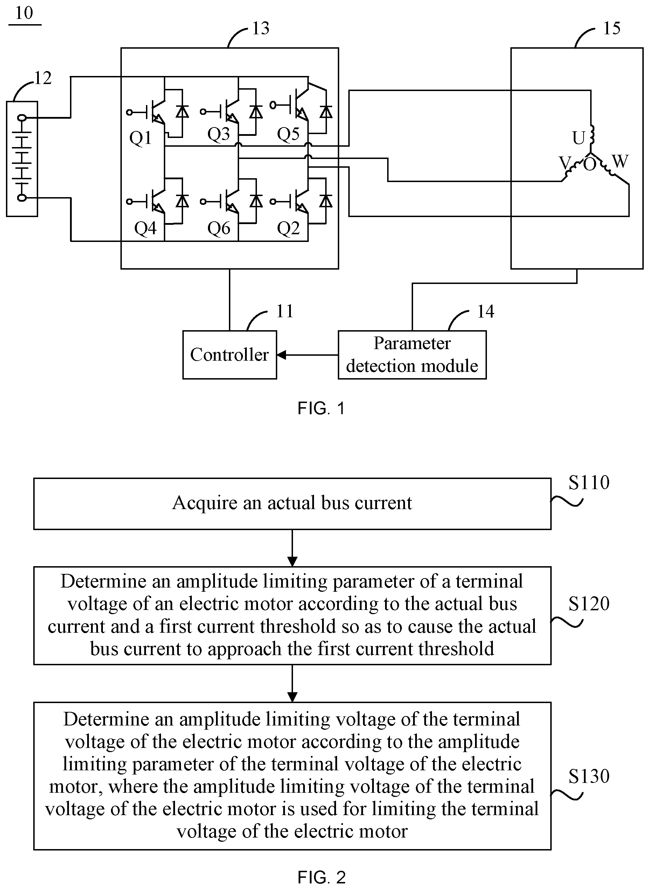

FIG. 1 is a structural diagram of an electric motor control system according to the present application. The electric motor control system is applicable in a power tool 20 provided in the present application. As shown in FIG. 1, the electric motor control system 10 may include a controller 11, a power supply device 12, a driver circuit 13 configured to drive an electric motor M, and a parameter detection module 14. The driver circuit 13 may include multiple electronic switches. The electronic switches may be field-effect transistors (FETs) or insulated-gate bipolar transistors (IGBTs). In some examples, the driver circuit 13 is a three-phase bridge circuit constituted by six electronic switches. For example, the driver circuit may include a first electronic switch Q1, a second electronic switch Q2, a third electronic switch Q3, a fourth electronic switch Q4, a fifth electronic switch Q5, and a sixth electronic switch Q6. The first electronic switch Q1, the third electronic switch Q3, and the fifth electronic switch Q5 may serve as high-side drive switches. The second electronic switch Q2, the fourth electronic switch Q4, and the sixth electronic switch Q6 may serve as low-side drive switches. The three electronic switches Q1, Q3, and Q5 as the high-side drive switches are disposed between a power supply bus and stator windings of the electric motor 15, respectively. The three electronic switches Q2, Q4, and Q6 as the low-side drive switches are disposed between the stator windings of the electric motor 15 and a ground wire, respectively. The power supply device 12 supplies a power signal to the controller 11 and the driver circuit 13 to implement a power supply function. The driver circuit 13 can output a drive signal to the electric motor M according to the power signal and a drive control signal supplied by the controller 11 so that the electric motor M is driven to run. The parameter detection module 14 is configured to acquire running data (including an operating current, an operating voltage, a torque, or a rotational speed) of the electric motor M and transmit the acquired running data to the controller 11 so that the controller 11 outputs a drive control signal to the driver circuit 13 according to actual running data of the electric motor M and target running data set by a user. The target running data may be a target rotational speed or a target torque inputted by the user through an operation button so that the actual running data of the electric motor M gradually approaches the target running data. The controller 11 may include control signal output terminals configured to correspond to control terminals of the electronic switches (that is, gates of the transistors) one to one. When the power tool runs, the controller 11 outputs drive control signals to the electronic switches through the control signal output terminals, so as to control the electronic switches to be turned on or off at a certain frequency. Thus, powers can be outputted to the stator windings of the electric motor 15 so that the electric motor 15 can output a torque.

A basic structure of the electric motor control system is described above for exemplarily introducing a control principle of the electric motor but is not limited thereto. As introduced in the background, when the electric motor stalls, the controller controls the electric motor to enter an overload protection mode so that the electric motor stops running and cannot operate normally, affecting user experience.

To solve the preceding technical problem, the present application provides an amplitude limiting method for a terminal voltage of an electric motor. The amplitude limiting method for a terminal voltage of an electric motor may be performed by the controller in the power tool provided in the present application. FIG. 2 is a flowchart of the amplitude limiting method for a terminal voltage of an electric motor according to the present application. As shown in FIG. 2, the amplitude limiting method for a terminal voltage of an electric motor includes the steps described below.

In S110, an actual bus current is acquired.

Specifically, the actual bus current may be a direct current in a circuit between the driver circuit and the power supply device. When the actual bus current is acquired, phase currents of the electric motor may be acquired through the parameter detection module, and then the actual bus current is calculated through the phase currents of the electric motor.

In S120, an amplitude limiting parameter of the terminal voltage of the electric motor is determined according to the actual bus current and a first current threshold so that the actual bus current approaches the first current threshold.

Specifically, after the actual bus current is acquired, the actual bus current may be compared with the first current threshold, and the amplitude limiting parameter of the terminal voltage of the electric motor is determined according to a comparison result. The comparison result may be the difference between the actual bus current and the first current threshold. With the determined amplitude limiting parameter, the controller can cause the actual bus current to approach the first current threshold when controlling, according to the amplitude limiting parameter, the electric motor to run. Thus, the actual bus current can be stabilized at the first current threshold and within the approximate range thereof instead of being excessively large. Accordingly, the actual bus current can be prevented from being excessively large due to a stall or an overload, and the electric motor can be prevented from entering a stall protection mode or an overcurrent protection mode and shutting down, thereby helping improve the user experience.

In some examples, the first current threshold may be determined according to a control target of the electric motor. The control target may be a target rotational speed of the electric motor or a target power of the electric motor. Assuming that a bus current determined according to the control target is a target bus current, the first current threshold may be equal to the target bus current, or the first current threshold may be greater than the target bus current. Thus, the electric motor can be prevented from shutting down due to an excessively large actual bus current in the case where it is ensured that the electric motor reaches the control target.

In some examples, the first current threshold may be less than a stall protection current, and/or the first current threshold may be less than an overcurrent protection current. Thus, it can be further ensured that the actual bus current does not exceed the stall protection current and/or the overcurrent protection current in a running process of the electric motor so that the electric motor can be further prevented from shutting down due to stall protection or overcurrent protection.

In S130, an amplitude limiting voltage of the terminal voltage of the electric motor is determined according to the amplitude limiting parameter of the terminal voltage of the electric motor, where the amplitude limiting voltage of the terminal voltage of the electric motor is used for limiting the terminal voltage of the electric motor.

Specifically, when the electric motor is controlled to run, to ensure that the electric motor runs safely, the controller generally sets an initial limiting amplitude to limit the terminal voltage of the electric motor. After the amplitude limiting parameter of the terminal voltage of the electric motor is determined, the initial limiting amplitude may be further limited according to the amplitude limiting parameter of the terminal voltage of the electric motor. Thus, the amplitude limiting voltage of the terminal voltage of the electric motor can be determined. When the electric motor is controlled, according to the amplitude limiting voltage, to run, an excessively high terminal voltage of the electric motor can be avoided so that the actual bus current can be limited.

In some examples, the amplitude limiting parameter of the terminal voltage of the electric motor includes at least one of an amplitude limiting coefficient a1 of the terminal voltage of the electric motor, a reduction value ΔU of the terminal voltage of the electric motor, and an amplitude limiting value U2 of the terminal voltage of the electric motor. Exemplarily, assuming that the maximum allowable voltage of the electric motor is U1, a value range of the amplitude limiting coefficient a1 of the terminal voltage of the electric motor a1 is as follows: 0 ≤ a1 ≤ 1. Then, when the amplitude limiting parameter of the terminal voltage of the electric motor includes the amplitude limiting coefficient a1 of the terminal voltage of the electric motor, the amplitude limiting voltage U0 of the terminal voltage of the electric motor may be determined according to the formula: U0 = U1 * a1. The reduction value ΔU of the terminal voltage of the electric motor is the difference between the maximum allowable voltage U1 of the terminal voltage of the electric motor and the amplitude limiting voltage U0. Then, when the amplitude limiting parameter of the terminal voltage of the electric motor includes the reduction value ΔU of the terminal voltage of the electric motor, the amplitude limiting voltage U0 of the terminal voltage of the electric motor may be determined according to the formula: U0 = U1 - ΔU. In addition, the amplitude limiting value U2 of the terminal voltage of the electric motor is the amplitude limiting voltage U0. Then, when the amplitude limiting parameter of the terminal voltage of the electric motor includes the amplitude limiting value U2 of the terminal voltage of the electric motor, the amplitude limiting voltage U0 of the terminal voltage of the electric motor may be determined according to the formula: U0 = U2.

According to the amplitude limiting method for a terminal voltage of an electric motor provided in the present application, after the actual bus current is acquired, the amplitude limiting parameter of the terminal voltage of the electric motor is determined according to the actual bus current and the first current threshold, and then the amplitude limiting voltage of the terminal voltage of the electric motor is determined according to the amplitude limiting parameter of the terminal voltage of the electric motor. Thus, the terminal voltage of the electric motor can be limited through the amplitude limiting voltage when the electric motor is controlled to run. On one hand, the probability can be reduced that the electric motor is damaged due to the excessively high terminal voltage of the electric motor. On the other hand, when the electric motor is controlled to run, the actual bus current of the electric motor can be caused, through the control of the amplitude limiting voltage, to approach the first current threshold. Thus, it is effectively ensured that the actual bus current is not excessively large, and the probability is reduced that the stall protection or the overcurrent protection is triggered by an excessively large actual bus current and thus the electric motor is caused to stop, thereby helping improve the user experience.

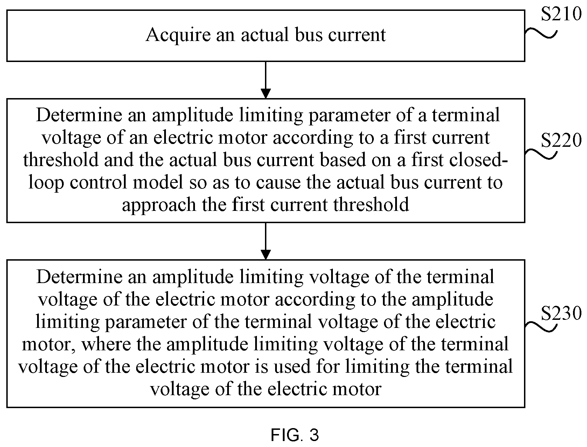

FIG. 3 is another flowchart of the amplitude limiting method for a terminal voltage of an electric motor according to the present application. As shown in FIG. 3, the amplitude limiting method for a terminal voltage of an electric motor includes the steps described below.

In S210, the actual bus current is acquired.

In S220, the amplitude limiting parameter of the terminal voltage of the electric motor is determined according to the first current threshold and the actual bus current based on a first closed-loop control model so that the actual bus current approaches the first current threshold.

In S230, the amplitude limiting voltage of the terminal voltage of the electric motor is determined according to the amplitude limiting parameter of the terminal voltage of the electric motor, where the amplitude limiting voltage of the terminal voltage of the electric motor is used for limiting the terminal voltage of the electric motor.

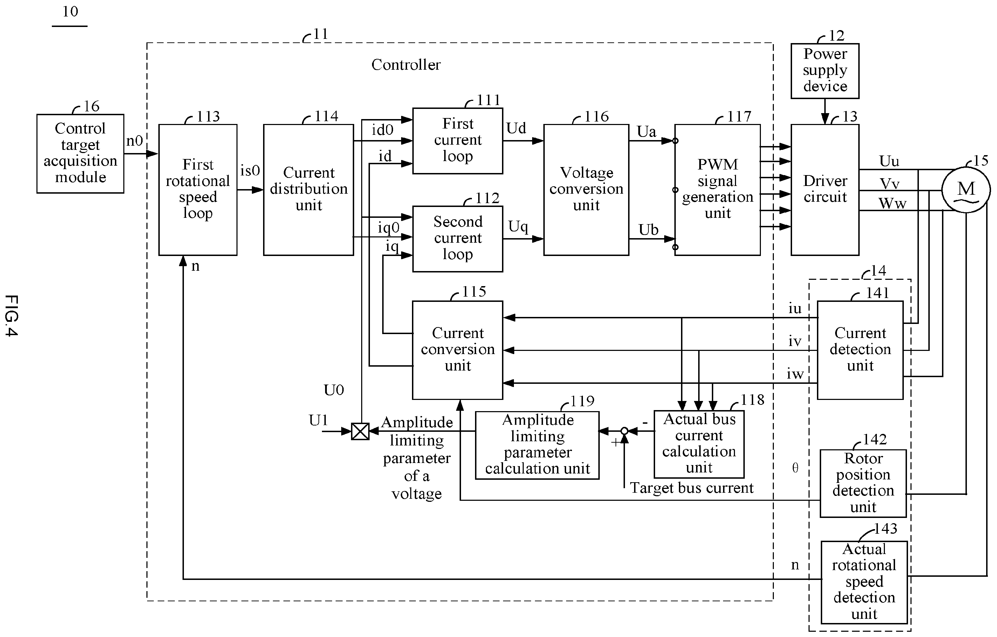

Exemplarily, FIG. 4 is another structural diagram of an electric motor control system according to the present application. As shown in FIG. 4, a vector control system (a field-oriented control (FOC) system) may be integrated into the controller 11. The vector control system may include at least a current loop circuit and a speed loop circuit and certainly may further include a position loop circuit. The preceding three closed-loop control circuits are basic circuits constituting the vector control system, and the FOC system is not described in detail in this example. Briefly, the current loop circuit includes two loops: a first current loop 111 and a second current loop 112. The first current loop 111 is a quadrature-axis (d-axis) current loop, and the second current loop 112 is a direct-axis (q-axis) current loop. In the existing art, each loop has two input parameters. One is current parameters iq0 and id0 determined according to the target rotational speed n0 or the target power acquired by a control target acquisition module 16. The other is current parameters iq and id of the electric motor 15 determined according to a collection signal of the parameter detection module 14. The speed loop circuit can affect input parameters of the current loop circuit. That is to say, the speed loop circuit is a proportional integral (PI) loop (that is, a first rotational speed loop 113) added in front of the current loop circuit so that a target current is0 is obtained according to a preset speed parameter (that is, the target rotational speed of the electric motor 15) and an actual rotational speed parameter of the electric motor 15. The actual rotational speed parameter of the electric motor 15 may be detected and supplied by an actual rotational speed detection unit 143 in the parameter detection module 14. Then, the input parameter, that is, iq0 and id0, in the current loop circuit is generated through a current distribution unit 114 according to the target current is0. Thus, the current loop circuit and the speed loop circuit can form double closed-loop control of a speed and a current. Actually, as shown in FIG. 4, the controller 11 further includes a current conversion unit 115. A speed estimation module, a position estimation module, a Clark transformation module, and a Park transformation module are integrated in the current conversion unit 115. The position estimation module can estimate or directly detect a rotational speed of the electric motor 15 or a rotor position of the electric motor 15. In the parameter detection module 14, a current detection unit 141 can directly collect a phase current of the electric motor 15, and a rotor position detection unit 142 can detect the rotor position. The Clark transformation module and the Park transformation module perform Clark transformation and Park transformation sequentially on the collected phase current and the collected rotor position so that the current parameters iq and id are obtained. The first current loop 111 outputs a d-axis voltage Ud according to id0 and id. The second current loop 112 outputs a q-axis voltage Uq according to the current parameters iq0 and iq. A voltage change unit 116 outputs intermediate control quantities Ua and Ub according to the q-axis voltage Uq and the d-axis voltage Ud so that a pulse-width modulation (PWM) signal generation unit 117 can output a corresponding PWM signal according to the intermediate control quantities Ua and Ub.

To acquire the amplitude limiting parameter of the terminal voltage of the electric motor, the controller 11 may be further configured to include the first closed-loop control model so that the amplitude limiting parameter of the terminal voltage of the electric motor can be calculated through the first closed-loop control model. Exemplarily, referring to FIG. 4, the first closed-loop control model may include an actual bus current calculation unit 118 and a first amplitude limiting parameter calculation unit 119. The actual bus current calculation unit 118 can calculate the actual bus current of the electric motor 15 according to three-phase currents detected by the current detection unit 141. The first amplitude limiting parameter calculation unit 119 can calculate and obtain the amplitude limiting parameter of the terminal voltage of the electric motor according to the actual bus current and the target bus current. The amplitude limiting voltage U0 of the terminal voltage of the electric motor can be determined in conjunction with the maximum allowable voltage U1 of the terminal voltage of the electric motor and the amplitude limiting parameter of the terminal voltage of the electric motor. Thus, the amplitude limiting voltage U0 can be used as a parameter of the first current loop 111 and the second current loop 112 so that the first current loop 111 determines the d-axis voltage Ud according to the current parameters id0 and id and the amplitude limiting voltage U0 of the terminal of the electric motor and the second current loop 112 determines the q-axis voltage Uq according to the current parameters iq0 and iq and the amplitude limiting voltage U0 of the terminal of the electric motor.

In some examples, when the actual bus current is greater than the first current threshold, the amplitude limiting voltage of the terminal voltage of the electric motor determined according to the amplitude limiting parameter of the terminal voltage of the electric motor is less than the maximum allowable voltage of the terminal voltage of the electric motor. The actual bus current may be subtracted from the first current threshold so that a current difference is obtained. The amplitude limiting parameter of the terminal voltage of the electric motor is related to the current difference and can be determined according to the current difference. After the amplitude limiting voltage of the terminal voltage of the electric motor is determined according to the amplitude limiting parameter of the terminal voltage of the electric motor, the amplitude limiting voltage of the terminal voltage of the electric motor is related to the current difference. For example, the larger the current difference, the lower the amplitude limiting voltage of the terminal voltage of the electric motor. Thus, the actual bus current can be effectively prevented from being excessively large due to the stall. Accordingly, the electric motor can be effectively prevented from shutting down due to the stall protection or the overcurrent protection.

In some examples, the amplitude limiting voltage of the terminal voltage of the electric motor is U0, and the maximum allowable voltage of the terminal voltage of the electric motor is U1, where 10% * U1 ≤ U0 ≤ 100% * U1. Thus, the amplitude limiting voltage U0 can be caused to be less than or equal to the maximum allowable voltage U1, and the electric motor is prevented from shutting down due to the stall protection or the overcurrent protection and is prevented from shutting down due to low-voltage protection caused by an excessively low amplitude limiting voltage U0, thereby helping improve the user experience.

In some examples, when the actual bus current is less than or equal to the first current threshold, the amplitude limiting voltage of the terminal voltage of the electric motor determined according to the amplitude limiting parameter of the terminal voltage of the electric motor is equal to the maximum allowable voltage of the terminal voltage of the electric motor. Specifically, when the actual bus current is less than or equal to the first current threshold, it is indicated that the actual bus current is within a normal range and does not cause the electric motor to undergo the stall protection or the overcurrent protection. In this case, it is not necessary to further limit the initial limiting amplitude of the terminal voltage of the electric motor through the amplitude limiting parameter, and the acquired amplitude limiting voltage of the terminal voltage of the electric motor may be equal to the maximum allowable voltage of the terminal voltage of the electric motor. It is to be understood that the amplitude limiting parameter of the terminal voltage of the electric motor may be a maximum parameter value in this case. For example, when the amplitude limiting parameter of the terminal voltage of the electric motor includes the amplitude limiting coefficient a1 of the terminal voltage of the electric motor, a1 = 1 in this case. If the amplitude limiting parameter of the terminal voltage of the electric motor includes the reduction value ΔU of the terminal voltage of the electric motor, ΔU = 0 in this case. If the amplitude limiting parameter of the terminal voltage of the electric motor includes the amplitude limiting value U2 of the terminal voltage of the electric motor, U2 = U1.

In some examples, the amplitude limiting method for a terminal voltage of an electric motor further includes the following step: the acquisition of the amplitude limiting parameter of the terminal voltage of the electric motor is stopped when the actual bus current is less than a second current threshold, where the second current threshold is less than the first current threshold.

Specifically, the second current threshold may be set for the actual bus current and is a preset value used for determining whether to further limit a default amplitude limiting value of the terminal voltage of the electric motor. When the actual bus current is less than the second current threshold, the actual bus current is relatively small, the probability that the electric motor stalls or is subjected to an overcurrent is extremely low, and an actual rotational speed of the electric motor may not reach the target rotational speed. In this case, the amplitude of the terminal voltage of the electric motor does not need to be limited, that is, the amplitude limiting parameter of the terminal voltage of the electric motor may not be acquired. However, when the actual bus current is greater than or equal to the second current threshold, it may be considered that the electric motor has the possibility of stalling or the overcurrent. Correspondingly, the amplitude limiting voltage of the terminal voltage of the electric motor may be selected to be limited as described above. Further, on the basis of ensuring that the second current threshold is less than the first current threshold, a specific value of the second current threshold may be specifically set according to a design requirement. When the first current threshold is greater than the target bus current, the second current threshold is less than the target bus current so that the electric motor is prevented from failing to reach the target rotational speed due to excessive amplitude limiting.

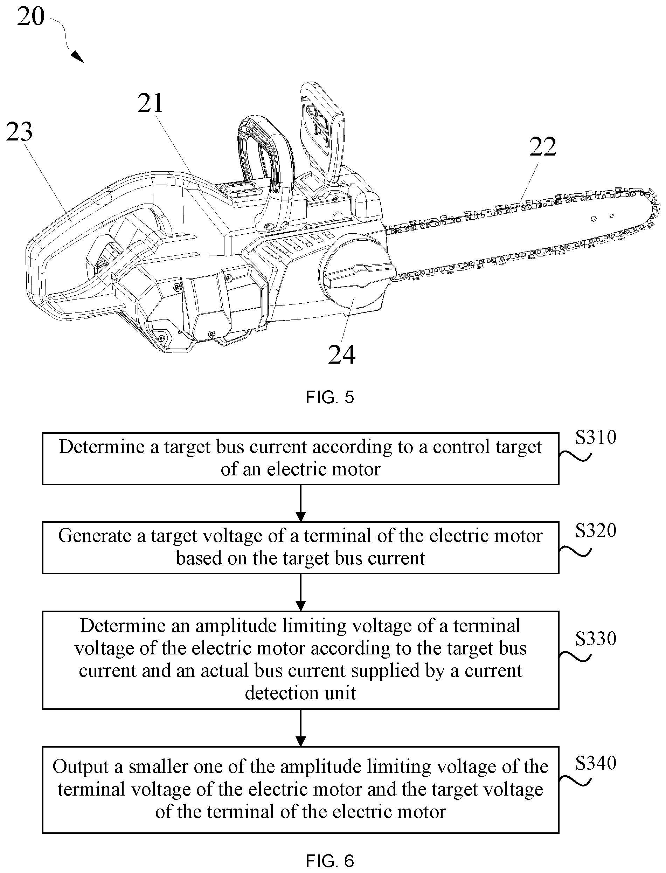

Based on the same inventive concept, the present application further provides a power tool. FIG. 5 is a structural view of the power tool according to the present application. As shown in FIG. 5, the power tool 20 includes a housing 21, a working head 22, and an electric motor (not shown in the figure) disposed in the housing 21 and configured to drive the working head 22.

The housing 21 is provided with an inner cavity. The electric motor is disposed in the inner cavity. The inner cavity further accommodates a transmission device and other electronic components such as a circuit board. A grip 23 and an operation device 24 may be disposed on the housing 21. The grip 23 is conveniently held by the user. The operation device 24 is used for adjusting the speed of the electric motor. The operation device 24 may be, but is not limited to, a trigger, a knob, a sliding mechanism, and like. In this example, the operation device 24 is configured as the sliding mechanism. The working head 22 is mounted at the front end of the housing 21. Depending on the type of power tool, different working heads 22 may be adopted. In this example, a chain and a saw blade are preferably used as the working head. That is, the power tool in this example is a chainsaw for implementing a cutting function. The rotating shaft of the electric motor drives the working head 22 through the transmission device and an output shaft.

The electric motor includes a stator and a rotor. The electric motor may be a brushless direct current motor and is preferably a sensorless motor (that is, an electric motor without a position sensor). In this example, the electric motor may be an inrunner or an outrunner. Three phases of stator windings A, B, and C of the electric motor may form a star connection or a delta connection.

The power tool 20 may further include a current detection unit configured to detect the actual bus current. The power tool 20 may also include a controller. It is to be understood that the power tool 20 is integrated with the electric motor control system 10. With reference to FIG. 4, in this case, the current detection unit of the power tool 20 is the current detection unit 141 in the electric motor control system 10. The current detection unit 141 can detect a phase current of the electric motor, so as to indirectly detect the actual bus current of the electric motor. Similarly, the controller of the power tool 20 is the controller 11 in the electric motor control system 10, and the controller 11 is electrically connected to at least the current detection unit 141. FIG. 6 is a flowchart of an electric motor control method in the controller. As shown in FIG. 6, the controller 11 is configured to perform the steps of the method described below.

In S310, the target bus current is determined according to the control target of the electric motor.

In S320, a target voltage of a terminal of the electric motor is generated based on the target bus current.

Specifically, with reference to FIGS. 4 and 5, the control target (at least one of the target rotational speed and the target power) of the electric motor 15 may be acquired through the control target acquisition module 16 so that the controller 11 may determine the target bus current according to the control target. After determining the target bus current, the controller 11 may further generate the target voltage of the terminal of the electric motor corresponding to the target bus current. Specifically, the target voltage of the terminal of the electric motor may be generated by using closed-loop control. That is, the target bus current is used as the control target, and the target voltage of the terminal of the electric motor is determined based on the closed-loop control so that the actual bus current approaches the target bus current.

In S330, the amplitude limiting voltage of the terminal voltage of the electric motor is determined according to the target bus current and the actual bus current supplied by the current detection unit.

Specifically, the target bus current may be compared with the actual bus current, and the amplitude limiting voltage of the terminal voltage of the electric motor may be determined according to a comparison result. For example, if the actual bus current is greater than the target bus current, it is indicated that the actual bus current has an overcurrent risk. In this case, it can be determined that the amplitude limiting voltage of the terminal voltage of the electric motor is a relatively small amplitude so that the actual bus current can be limited from the overcurrent.

In S340, a smaller one of the amplitude limiting voltage of the terminal voltage of the electric motor and the target voltage at the terminal of the electric motor is outputted.

After the amplitude limiting voltage of the terminal voltage of the electric motor is determined, the amplitude limiting voltage of the terminal voltage of the electric motor may be compared with the target voltage of the terminal of the electric motor, and the smaller one of the amplitude limiting voltage of the terminal voltage of the electric motor and the target voltage of the terminal of the electric motor is outputted. Thus, the smaller one of the amplitude limiting voltage of the terminal voltage of the electric motor and the target voltage of the terminal of the electric motor may be used as a control standard for the terminal voltage of the electric motor. Accordingly, the actual bus current can be prevented from being excessively large due to an excessively high terminal voltage of the electric motor, it can be ensured that the electric motor is prevented from shutting down due to the stall protection and the overcurrent protection, and the user experience can be effectively improved.

In some examples, the controller 11 is further configured to: generate the first current threshold according to the target bus current, where the first current threshold is greater than or equal to the target bus current; and determine the amplitude limiting voltage of the terminal voltage of the electric motor so as to cause the actual bus current to approach the first current threshold. Thus, the electric motor can be prevented from shutting down due to the excessively large actual bus current in the case where it is ensured that the electric motor reaches the control target.

In some examples, the first current threshold may be less than the stall protection current, and/or the first current threshold may be less than the overcurrent protection current. Thus, it can be further ensured that the actual bus current does not exceed the stall protection current and/or the overcurrent protection current in the running process of the electric motor so that the electric motor can be further prevented from shutting down due to the stall protection or the overcurrent protection.

In some examples, the controller 11 is further configured to: adjust the amplitude limiting parameter of the terminal voltage of the electric motor so as to cause the actual bus current to approach the first current threshold; and determine the amplitude limiting voltage of the terminal voltage of the electric motor according to the amplitude limiting parameter of the terminal voltage of the electric motor and the maximum allowable voltage U1 of the terminal voltage of the electric motor.

Specifically, in the controller 11, the amplitude limiting parameter of the terminal voltage of the electric motor may be adjusted according to the actual bus current and the target bus current. Specifically, the amplitude limiting parameter of the terminal voltage of the electric motor may be calculated through the amplitude limiting parameter calculation unit 119 in the controller 11 according to the actual bus current and the target bus current. Furthermore, the amplitude limiting voltage U0 of the terminal voltage of the electric motor may be determined according to the amplitude limiting parameter and the maximum allowable voltage U1 of the terminal voltage of the electric motor. The amplitude limiting voltage U0 of the terminal voltage of the electric motor may be supplied to the first current loop 111 of the controller 11 and the second current loop 112 of the controller 11 so that the q-axis voltage Uq and the d-axis voltage Ud are determined. Thus, amplitude limiting on the terminal voltage of the electric motor is implemented, and it can be ensured that the actual bus current is not excessively large. Accordingly, it can be ensured that the electric motor is prevented from shutting down due to the stall protection and the overcurrent protection.

In some examples, the amplitude limiting parameter of the terminal voltage of the electric motor includes at least one of the amplitude limiting coefficient a1 of the terminal voltage of the electric motor, the reduction value ΔU of the terminal voltage of the electric motor, and the amplitude limiting value U2 of the terminal voltage of the electric motor.

The present application provides the power tool. The controller controls the electric motor to run to drive the working head so that a corresponding action can be performed. When the electric motor is controlled to run, the controller is configured to determine the target bus current according to the control target of the electric motor. Then, the target voltage of the terminal of the electric motor can be generated based on the target bus current, and the amplitude limiting voltage of the terminal voltage of the electric motor is determined according to the target bus current and the actual bus current. Finally, the smaller one of the amplitude limiting voltage of the terminal voltage of the electric motor and the target voltage of the terminal of the electric motor is outputted. The smaller one of the amplitude limiting voltage of the terminal voltage of the electric motor and the target voltage of the terminal of the electric motor may be used as the control standard for the terminal voltage of the electric motor. Accordingly, the actual bus current can be prevented from being excessively large due to the excessively high terminal voltage of the electric motor, it can be ensured that the electric motor is prevented from shutting down due to the stall protection or the overcurrent protection, and the user experience can be effectively improved.

The present application does not specifically limit the type of power tool 20, and the figure only exemplarily shows the case where the power tool 20 is the chainsaw. It is to be understood that the preceding power tool may be a handheld tool such as a circular saw, a reciprocating saw, an electric drill, or a screwdriver in other possible examples of the present application. Alternatively, the power tool may be a table tool such as a table saw or a miter saw. Alternatively, the power tool may be outdoor power equipment such as a mower or a snow thrower. Alternatively, the power tool may be a robotic tool such as a robotic mower or a robotic snow thrower. Alternatively, the power tool may be a push power tool such as a push mower or a push snow thrower. Alternatively, the preceding power tool may be a vehicle device such as a utility task vehicle (UTV)/a farmer's vehicle, an all-terrain vehicle (ATV)/a dune buggy, or a golf cart. Alternatively, the power tool may be an outdoor wheeled tool, an outdoor electric vehicle, or the like. Alternatively, the preceding power tool may be a decoration tool such as an angle grinder or an impact wrench, which is used in scenarios such as construction projects. Alternatively, the power tool may be a garden tool such as a pruner or a string trimmer, which is used in a gardening scenario. Alternatively, the power tool may be a cleaning tool such as a blower or a cleaning machine. Alternatively, the power tool may be a sanding tool such as an angle grinder or a sander. Alternatively, the power tool may be another tool such as a lamp or a fan.

Based on the same inventive concept, the present application further provides a power tool. The power tool may be the same as the power tool in the preceding example. Referring to FIG. 5, the power tool 20 includes the housing 21, the working head 22, and the electric motor 15 disposed in the housing and configured to drive the working head 22. On this basis, the power tool 20 may further include a load detection unit configured to detect real-time load data of the electric motor 15.

In some examples, the load detection unit includes at least one of a bus current detection unit, a temperature detection unit, a rotational speed detection unit, and a power detection unit. Load data may include at least one of the actual bus current, an actual temperature of the electric motor, an actual rotational speed of the electric motor, and an actual power of the electric motor. With reference to FIG. 4, the parameter detection module 14 may be reused as the load detection unit to detect the real-time load data. For example, the parameter detection module 14 may be a bus current detection unit.

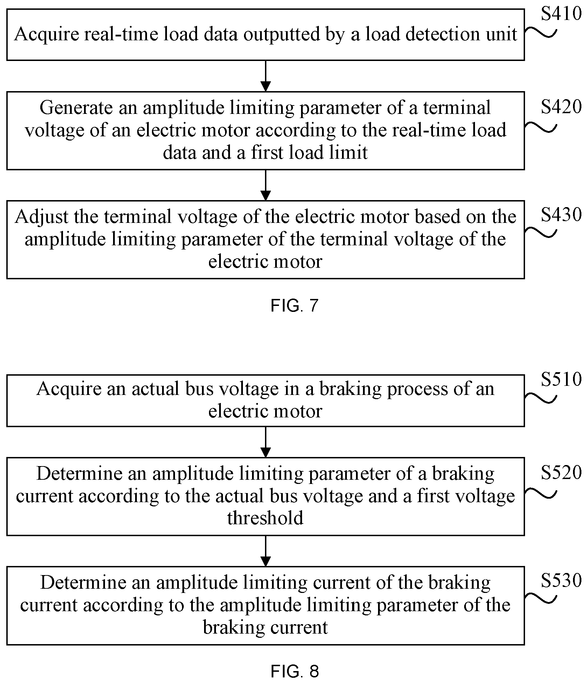

The power tool 20 further includes the controller 11 electrically connected to at least the load detection unit. FIG. 7 is another flowchart of an electric motor control method in the controller. As shown in FIG. 7, the controller 11 is configured to be capable of performing the steps of the method described below.

In S410, the real-time load data outputted by the load detection unit is acquired.

In S420, the amplitude limiting parameter of the terminal voltage of the electric motor is generated according to the real-time load data and a first load limit.

In S430, the terminal voltage of the electric motor is adjusted based on the amplitude limiting parameter of the terminal voltage of the electric motor.

Specifically, the controller 11 may compare the real-time load data supplied by the load detection unit with the corresponding first load limit and generate the amplitude limiting parameter of the terminal voltage of the electric motor according to a comparison result. Furthermore, the terminal voltage of the electric motor may be adjusted according to the amplitude limiting parameter of the terminal voltage of the electric motor so that the electric motor runs safely and stably.

For example, when the real-time load data includes the actual bus current, the first load limit may be the first current threshold. In this case, the amplitude limiting parameter of the terminal voltage of the electric motor may be determined according to the actual bus current and the first current threshold. When the real-time load data includes the actual temperature of the electric motor, the first load limit may be a first temperature threshold. In this case, the amplitude limiting parameter of the terminal voltage of the electric motor may be determined according to the actual temperature of the electric motor and the first temperature threshold. When the real-time load data includes the actual rotational speed of the electric motor, the first load limit may be a first rotational speed threshold. In this case, the amplitude limiting parameter of the terminal voltage of the electric motor may be determined according to the actual rotational speed of the electric motor and the first rotational speed threshold. In addition, when the real-time load data includes the actual power of the electric motor, the first load limit may be a first power threshold. In this case, the amplitude limiting parameter of the terminal voltage of the electric motor may be determined according to the actual power of the electric motor and the first power threshold.

In some examples, the first load limit is determined according to a stall protection load value and/or an overcurrent protection load value. It can be ensured that the real-time load data of the electric motor in the running process is always maintained below the range specified by the stall protection load value and/or the overcurrent protection load value, which can ensure that the electric motor runs safely and stably and helps improve the user experience.

The example in which the load detection unit includes the bus current detection unit is used. The controller 11 is further configured to: acquire the actual bus current outputted by the bus current detection unit; and determine the amplitude limiting parameter of the terminal voltage of the electric motor according to the actual bus current and the first current threshold so as to cause the actual bus current to approach the first current threshold. Thus, the actual bus current can be stabilized at the first current threshold and within the approximate range thereof instead of being excessively large. Accordingly, the actual bus current can be prevented from being excessively large due to the stall or the overload, and the electric motor can be prevented from entering the stall protection mode or the overcurrent protection mode and shutting down, thereby helping improve the user experience.

In some examples, when the real-time load data includes two or more of the actual bus current, the actual temperature of the electric motor, the actual rotational speed of the electric motor, and the actual power of the electric motor, the amplitude limiting parameter is determined according to various real-time load data, then the amplitude limiting voltages of the terminal voltage of the electric motor determined according to the amplitude limiting parameters may be compared, and the minimum amplitude limiting voltage is used as the control standard for the terminal voltage of the electric motor, which can further ensure that the electric motor runs safely and stably.

In some examples, the controller 11 is further configured to: determine the amplitude limiting voltage of the terminal voltage of the electric motor according to the amplitude limiting parameter of the terminal voltage of the electric motor; and adjust the terminal voltage of the electric motor so that the terminal voltage of the electric motor does not exceed the amplitude limiting voltage. It can be ensured that in the running process of the electric motor, the terminal voltage of the electric motor is always in a safe running range, the electric motor can be prevented from an overcurrent, an overtemperature, an overspeed, and an excessively high actual power, and it can be ensured that the electric motor runs safely and stably.

The power tool provided in the present application includes the load detection unit configured to detect the real-time load data of the electric motor. When the controller controls the electric motor to run, the real-time load data outputted by the load detection unit is acquired, and then the amplitude limiting parameter of the terminal voltage of the electric motor is generated according to the real-time load data and the first load limit. Thus, the terminal voltage of the electric motor may be adjusted based on the amplitude limiting parameter of the terminal voltage of the electric motor, the electric motor can be prevented from the overcurrent, the overtemperature, the overspeed, and the excessively high actual power due to the overload, and it can be ensured that the electric motor runs safely and stably.

In some examples, the controller 11 is further configured to generate the amplitude limiting parameter of the terminal voltage of the electric motor according to the difference between the real-time load data and the first load limit when the real-time load data exceeds the first load limit.

Specifically, for example, the real-time load data includes the actual bus current, and when the actual bus current is greater than the first current threshold, the amplitude limiting voltage of the terminal voltage of the electric motor determined according to the amplitude limiting parameter of the terminal voltage of the electric motor is less than the maximum allowable voltage of the terminal voltage of the electric motor. The actual bus current may be subtracted from the first current threshold so that the current difference is obtained. The amplitude limiting parameter of the terminal voltage of the electric motor is related to the current difference and can be determined according to the current difference. For example, a PI controller is configured to determine the limiting parameter of the motor terminal voltage according to the current difference, so as to implement PI regulation on the actual bus current. Thus, after the amplitude limiting voltage of the terminal voltage of the electric motor is determined according to the amplitude limiting parameter of the terminal voltage of the electric motor, the amplitude limiting voltage of the terminal voltage of the electric motor is related to the current difference. For example, the larger the current difference, the lower the amplitude limiting voltage of the terminal voltage of the electric motor. Thus, the actual bus current can be effectively prevented from being excessively large due to the stall. Accordingly, the electric motor can be effectively prevented from shutting down due to the stall protection or the overcurrent protection.

In some examples, the controller 11 is further configured to stop generating the amplitude limiting parameter of the terminal voltage of the electric motor when the real-time load data is lower than a second load limit.

Specifically, on the basis of ensuring that the second load limit is less than the first load limit, the specific value of the second current threshold may be specifically set according to the design requirement. If the actual bus current is less than the second current threshold, it is indicated that the electric motor is running normally, and the actual rotational speed of the electric motor may not reach the target rotational speed. In this case, it is not necessary to further limit the initial limiting amplitude of the terminal voltage of the electric motor through the amplitude limiting parameter. That is, it is not necessary to acquire the amplitude limiting parameter of the terminal voltage of the electric motor, and the terminal voltage of the electric motor is maintained at the maximum allowable voltage.

Based on the same inventive concept, the present application further provides an amplitude limiting method for a braking current of an electric motor. FIG. 8 is a flowchart of the amplitude limiting method for a braking current of an electric motor according to the present application. As shown in FIG. 8, the amplitude limiting method for a braking current of an electric motor includes the steps described below.

In S510, an actual bus voltage is acquired in a braking process of the electric motor.

In S520, an amplitude limiting parameter of the braking current is determined according to the actual bus voltage and a first voltage threshold.

The first voltage threshold is determined according to an actual power supply voltage of a power supply of the electric motor.

In S530, an amplitude limiting current of the braking current is determined according to the amplitude limiting parameter of the braking current.

The amplitude limiting current of the braking current is used for limiting the braking current of the electric motor.

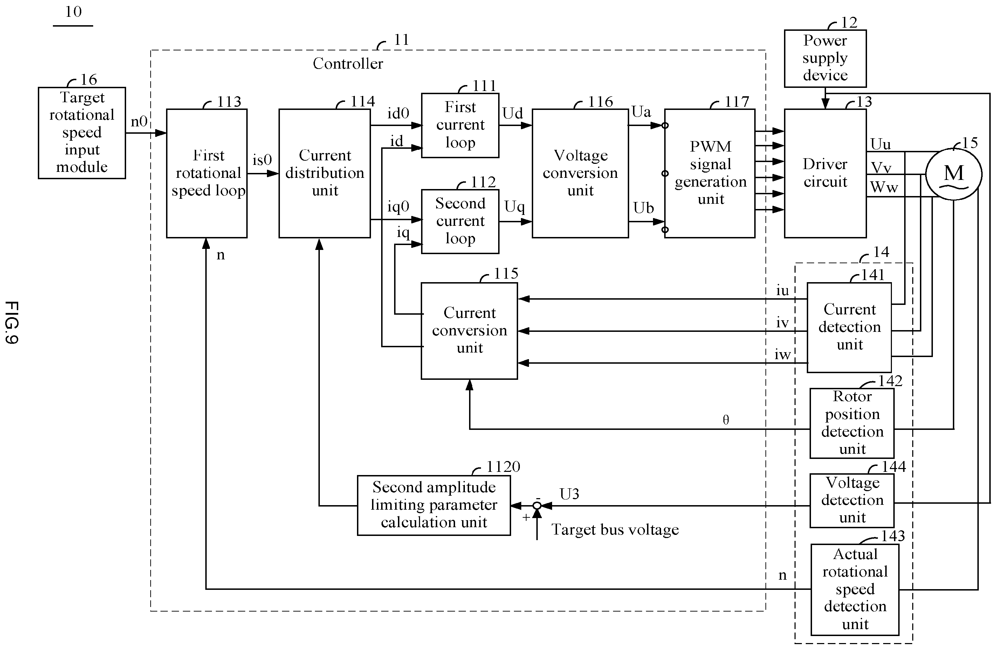

Specifically, FIG. 9 is another structural diagram of an electric motor control system according to the present application. With reference to FIGS. 1, 4, and 9, a positive terminal of the driver circuit 13 is electrically connected to a positive output terminal of the power supply device 12, a negative terminal of the driver circuit 13 is electrically connected to a negative output terminal of the power supply device 12, and the actual bus voltage U3 may be a voltage detected from a circuit between the power supply device 12 and the driver circuit 13. The power supply of the electric motor is the power supply device 12, and the first voltage threshold may be determined according to the actual power supply voltage of the power supply device 12.

The parameter detection module 14 may further include a voltage detection unit 144. In the braking process of the electric motor 15, the voltage detection unit 144 may detect the actual bus voltage U3 and supply the actual bus voltage U3 to the controller 11. After the actual bus voltage is acquired, the actual bus voltage may be compared with the first voltage threshold, and the amplitude limiting parameter of the braking current is determined according to a comparison result. Thus, the amplitude limiting current of the braking current may be calculated according to the amplitude limiting parameter of the braking current. In the process where the electric motor is controlled to brake, the amplitude limiting current of the braking current may be used as the maximum allowable current of the braking current so that power components in the driver circuit 13 and the power supply device 12 are prevented from damage caused by the excessively high terminal voltage of the electric motor in the braking process of the electric motor. In addition, the braking process of the electric motor can be controlled, and a braking torque can be conveniently adjusted.

In some examples, the amplitude limiting parameter of the braking current includes at least one of an amplitude limiting coefficient of the braking current, a reduction value of the braking current, and an amplitude limiting value of the braking current. Exemplarily, assuming that the maximum allowable braking current of the electric motor is I1, the value range of the amplitude limiting coefficient b1 of the braking current is as follows: 0 ≤ b1 ≤ 1. Then, when the amplitude limiting parameter of the braking current includes the amplitude limiting coefficient b1 of the braking current, the amplitude limiting current I0 of the braking current may be determined according to the formula: I0 = I1 * b1. The reduction value ΔI of the braking current is the difference between the maximum allowable braking current U1 and the amplitude limiting current I0 of the braking current. Then, when the amplitude limiting parameter of the terminal voltage of the electric motor includes the reduction value ΔI of the braking current, the amplitude limiting current I0 of the braking current may be determined according to the formula: I0 = I1 - ΔI. The amplitude limiting value I2 of the braking current is the amplitude limiting current I0 of the braking current. Then, when the amplitude limiting parameter of the braking current includes the amplitude limiting value I2 of the braking current, the amplitude limiting current I0 of the braking current may be determined according to the formula: I0 = I2.

According to the amplitude limiting method for a braking current of an electric motor provided in the present application, the actual bus voltage is acquired in the braking process of the electric motor, the actual bus voltage is used as a braking control parameter, and the amplitude limiting parameter of the braking current is determined according to the actual bus voltage and the first voltage threshold, and then the amplitude limiting current of the braking current is determined according to the amplitude limiting parameter of the braking current. Thus, the case can be avoided where the power supply of the electric motor is reversely charged due to the excessively high terminal voltage of the electric motor or an excessively large braking current in the braking process of the electric motor. In addition, the power components in the driver circuit and the power supply device can be further prevented from damage. Moreover, the braking process of the electric motor can be controlled, and the braking torque can be conveniently adjusted.

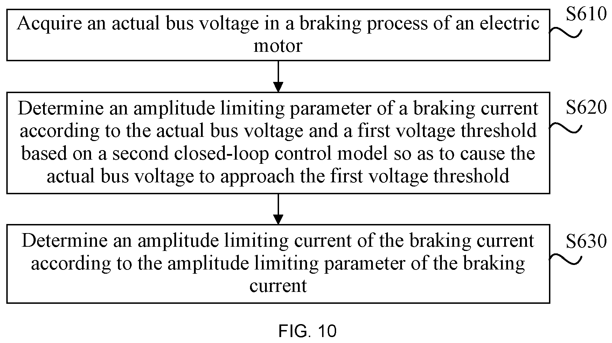

In some examples, FIG. 10 is a flowchart of an amplitude limiting method for a braking current of an electric motor according to the present application. As shown in FIG. 10, the amplitude limiting method for a braking current of an electric motor includes the steps described below.

In S610, the actual bus voltage is acquired in the braking process of the electric motor.

In S620, the amplitude limiting parameter of the braking current is determined according to the actual bus voltage and the first voltage threshold based on a second closed-loop control model so that the actual bus voltage approaches the first voltage threshold.

The first voltage threshold is determined according to the actual power supply voltage of the power supply of the electric motor.

In S630, the amplitude limiting current of the braking current is determined according to the amplitude limiting parameter of the braking current.

The amplitude limiting current of the braking current is used for limiting the braking current of the electric motor.

Specifically, as described in the preceding example, the vector control system (the FOC system) may be integrated into the controller 11. The vector control system may include at least the current loop circuit and the speed loop circuit and certainly may further include the position loop circuit. The current loop circuit includes the two loops: the first current loop 111 and the second current loop 112. The speed loop circuit includes the first rotational speed loop 113 in front of the current loop circuit. The actual rotational speed parameter of the electric motor 15 may be detected and supplied by the actual rotational speed detection unit 143 in the parameter detection module 14. Then, the input parameter, that is, iq0 and id0, in the current loop circuit is generated through the current distribution unit 114 according to the target current is0. Thus, the current loop circuit and the speed loop circuit can implement the double closed-loop control of a speed and a current. The controller 11 further includes the current conversion unit 115. The speed estimation module, the position estimation module, the Clark transformation module, and the Park transformation module are integrated in the current conversion unit 115. The position estimation module can estimate or directly detect the rotational speed of the electric motor 15 or the rotor position of the electric motor 15. In the parameter detection module 14, the current detection unit 141 can directly collect the phase current of the electric motor 15, and the rotor position detection unit 142 can detect the rotor position. The Clark transformation module and the Park transformation module perform the Clark transformation and the Park transformation sequentially on the collected phase current and the collected rotor position so that the current parameters iq and id are obtained. The first current loop 111 outputs the d-axis voltage Ud according to id0 and id. The second current loop 112 outputs the q-axis voltage Uq according to the current parameters iq0 and iq. The voltage change unit 116 outputs the intermediate control quantities Uα and Uβ according to the q-axis voltage Uq and the d-axis voltage Ud so that the PWM signal generation unit 117 can output the corresponding PWM signal according to the intermediate control quantities Uα and Uβ.

When the electric motor 15 brakes, the controller 11 may control the driver circuit 13 to act, so as to control the electric motor 15 to stop. For example, the controller 11 may control all transistors of the driver circuit 13 to be turned off to stop outputting drive currents to the electric motor 15, or the controller 11 may control the driver circuit 13 to act to supply a reverse braking current to the electric motor 15. To control the braking process of the electric motor 15, the controller 11 may be configured to include the second closed-loop control model so that the braking current of the electric motor can be controlled. For example, referring to FIG. 9, the controller 11 may further include a second amplitude limiting parameter calculation unit 1120. The second amplitude limiting parameter calculation unit 1120 is a main unit of the second closed-loop model and can calculate the amplitude limiting parameter of the braking current according to the first voltage threshold and the actual bus voltage U3 supplied by the voltage detection unit 144. The amplitude limiting parameter of the braking current may be supplied to the current distribution unit 114 so that the current distribution unit 114 may determine the current parameters iq0 and id0 according to the target current is0 and the amplitude limiting parameter of the braking current.

The first voltage threshold is determined according to the actual power supply voltage of the power supply of the electric motor, and the actual power supply voltage of the power supply of the electric motor may be the actual power supply voltage of the power supply device 12. Generally, the actual power supply voltage may be understood as a rated power supply voltage of the power supply device 12. When the power supply device 12 is constituted by multiple cells, the rated power supply voltage may be a maximum voltage that the cells can withstand. When the power supply device 12 is constituted by an alternating current power supply and a rectifier circuit, the rated power supply voltage may be a maximum voltage threshold of electronic components in the alternating current power supply and the rectifier circuit. Alternatively, in the case where the voltage of the power supply device 12 is attenuated or the power supply voltage outputted by the power supply device 12 is rectified and then supplied to the driver circuit 13, the actual power supply voltage is less than the rated power supply voltage of the power supply device 12. Therefore, the first voltage threshold is determined according to the actual power supply voltage of the power supply of the electric motor, and when the magnitude of the actual bus voltage of the electric motor is controlled according to the first voltage threshold, the power supply device 12 can be further prevented from being damaged due to the excessively large braking current.

In some examples, the actual power supply voltage of the power supply of the electric motor is V1, the first voltage threshold is V2, and the relationship between V1 and V2 may be configured as follows: 0.8 * V1 ≤ V2 ≤ 1.3 * V1. Therefore, the actual bus voltage of the electric motor can be within a safe range according to the first voltage threshold, and then the braking current of the electric motor can be controlled not to be excessively large to damage the power supply device.

In some examples, at the same actual bus voltage, the power of the electric motor is positively correlated with the maximum amplitude of the braking current. In the case where the actual bus voltage remains constant, the higher the power of the electric motor, the higher the torque. Correspondingly, a relatively large braking current is required when the electric motor brakes. Therefore, the power of the electric motor is configured to be positively correlated with the maximum amplitude of the braking current so that the braking process of the electric motor can be further accurately controlled.

Based on the same inventive concept, the present application further provides a power tool. Referring to FIG. 5, the power tool 20 includes the housing 21, the working head 22, and the electric motor 15 disposed in the housing 21 and configured to drive the working head 22. Referring to FIG. 9, the power tool 20 may further include the voltage detection unit 144 configured to detect the actual bus voltage. In addition, the power tool 20 further includes the controller 11. The controller 11 is configured to: determine the amplitude limiting current of the braking current according to the actual bus voltage outputted by the voltage detection unit 144 and the first voltage threshold, where the first voltage threshold is determined according to the rated power supply voltage of the power supply of the electric motor; and set the braking torque of the electric motor based on the amplitude limiting current of the braking current.

Specifically, the larger the amplitude limiting current of the braking current, the larger the maximum braking current allowed in the braking process, that is, the higher the upper limit of the braking current. In the braking process, the larger the braking current, the higher the braking torque of the electric motor. Accordingly, the electric motor shuts down at a faster speed. Therefore, a corresponding braking torque may be set based on the amplitude limiting current of the braking current. In this manner, when the amplitude limiting current of the braking current is relatively large, a relatively high braking torque is correspondingly set, and when the amplitude limiting current of the braking current is relatively small, a relatively low braking torque is correspondingly set so that the braking torque of the electric motor can be matched with the amplitude limiting current of the braking current. In the braking process, the electric motor is controlled, according to the set braking torque, to shut down so that the terminal voltage of the electric motor can be prevented from being excessively high due to an excessively high braking torque in the braking process. Thus, the power components in the driver circuit and the power supply device can be prevented from damage caused by an excessively high reverse charging voltage or an excessively large charging current, and the electric motor can be controlled to brake safely.

In the power tool provided in the present application, the controller is configured to acquire the actual bus voltage in the braking process of the electric motor, use the actual bus voltage as the braking control parameter, and determine the amplitude limiting current of the braking current according to the actual bus voltage and the first voltage threshold. Thus, when the braking torque of the electric motor is set according to the amplitude limiting current of the braking current, the power components in the driver circuit and the power supply device can be prevented from damage caused by the excessively high terminal voltage of the electric motor in the braking process of the electric motor. In addition, the braking process of the electric motor can be controlled.

In some examples, the controller 11 is further configured to: acquire the actual bus voltage; determine the amplitude limiting parameter of the braking current according to the actual bus voltage and the first voltage threshold; and determine the amplitude limiting current of the braking current according to the amplitude limiting parameter of the braking current. The specific method is the same as that in the preceding example. The details are not repeated here.

In some examples, the controller 11 is further configured to: determine a target braking current according to a braking control target; adjust the target braking current according to the amplitude limiting current of the braking current when the target braking current exceeds the amplitude limiting current of the braking current; and set the braking torque of the electric motor based on the adjusted target braking current.

The control target may be the target rotational speed or the target power. Referring to FIG. 9, the control target is the target rotational speed n0, and the target braking current is0 may be determined through the first rotational speed loop 113 according to the target rotational speed n0. The current distribution unit 114 may compare the target braking current is0 with the amplitude limiting current of the braking current. When it is determined that the target braking current exceeds the amplitude limiting current of the braking current, the target braking current may be adjusted and caused to be equal to or less than the amplitude limiting current of the braking current. Then, the current parameters id0 and iq0 are determined according to the adjusted target braking current so that the braking torque of the electric motor is set.

In some examples, the controller 11 is further configured to: determine a smaller one of the amplitude limiting current of the braking current and the target braking current as the amplitude limiting value of the current; limit the braking current of the electric motor according to the amplitude limiting value of the current; and set the braking torque of the electric motor based on the limited braking current.

In some examples, the controller 11 is further configured to: acquire a setting instruction about a target braking gear and determine, according to the setting instruction, a target braking current corresponding to the target braking gear; and determine the braking torque of the electric motor based on the amplitude limiting current of the braking current and the target braking current.

The power tool may be provided with multiple braking gears. Different braking gears correspond to different braking currents, that is, the different braking gears correspond to different upper limits of the braking current. Under a working condition requiring high-risk operation, the user may select a relatively high braking gear to cause the upper limit of the braking current to be relatively high so that rapid braking can be achieved. However, under a working condition requiring precise operation, a relatively low braking gear may be selected to cause the upper limit of the braking current to be relatively low so that slow braking can be performed and the power tool can be prevented from generating a relatively large vibration due to rapid braking and the power tool is prevented from damage. The user may set the braking gear through a gear control operation member, to send the controller 11 the setting instruction about the target braking gear. The controller 11 may acquire the setting instruction about the target braking gear through the control target acquisition module 16 and then determine, according to the setting instruction, the target braking current is0 corresponding to the target braking gear. The current distribution unit 114 may further determine the braking torque of the electric motor based on the amplitude limiting current of the braking current and the target braking current.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool (20), comprising:
a housing (21);
a working head (22);
an electric motor (15) disposed in the housing and configured to drive the working head;
a load detection unit (14) configured to detect real-time load data of the power tool; and
a controller (11) electrically connected to at least the load detection unit, wherein the controller is configured to:
acquire the real-time load data outputted by the load detection unit;
generate an amplitude limiting parameter of a terminal voltage of the electric motor according to the real-time load data and a first load limit; and
adjust the terminal voltage of the electric motor based on the amplitude limiting parameter of the terminal voltage of the electric motor.

2. The power tool according to claim 1, wherein the load detection unit comprises at least one of a bus current detection unit, a temperature detection unit, a rotational speed detection unit, and a power detection unit.

3. The power tool according to claim 1, wherein the load detection unit comprises a bus current detection unit configured to detect an actual bus current; and the controller is further configured to: acquire the actual bus current outputted by the bus current detection unit; and determine the amplitude limiting parameter of the terminal voltage of the electric motor according to the actual bus current and a first current threshold so as to cause the actual bus current to approach the first current threshold.

4. The power tool according to claim 3, wherein the controller is further configured to determine the amplitude limiting parameter of the terminal voltage of the electric motor according to the first current threshold and the actual bus current based on a first closed-loop control model.

5. The power tool according to claim 3, wherein when the actual bus current is greater than the first current threshold, an amplitude limiting voltage of the terminal voltage of the electric motor determined according to the amplitude limiting parameter of the terminal voltage of the electric motor is less than a maximum allowable voltage of the terminal voltage of the electric motor; and when the actual bus current is less than or equal to the first current threshold, the amplitude limiting voltage of the terminal voltage of the electric motor determined according to the amplitude limiting parameter of the terminal voltage of the electric motor is equal to the maximum allowable voltage of the terminal voltage of the electric motor.

6. The power tool according to claim 1, wherein the first current threshold is determined according to a control target of the electric motor.

7. The power tool according to claim 1, wherein the controller is further configured to: determine an amplitude limiting voltage of the terminal voltage of the electric motor according to the amplitude limiting parameter of the terminal voltage of the electric motor; and adjust the terminal voltage of the electric motor to cause the terminal voltage of the electric motor to be less than or equal to the amplitude limiting voltage.

8. The power tool according to claim 7, wherein the load detection unit comprises a bus current detection unit, the real-time load data comprises an actual bus current, and the first load limit is a first current threshold.

9. The power tool according to claim 8, wherein when the actual bus current is greater than the first current threshold, the amplitude limiting voltage of the terminal voltage of the electric motor determined according to the amplitude limiting parameter of the terminal voltage of the electric motor is less than a maximum allowable voltage of the terminal voltage of the electric motor; and when the actual bus current is less than or equal to the first current threshold, the amplitude limiting voltage of the terminal voltage of the electric motor determined according to the amplitude limiting parameter of the terminal voltage of the electric motor is equal to the maximum allowable voltage of the terminal voltage of the electric motor.

10. The power tool according to claim 1, wherein the amplitude limiting voltage of the terminal voltage of the electric motor is U0, and a maximum allowable voltage of the terminal voltage of the electric motor is U1, wherein 10% * U1 ≤ U0 ≤ 100% * U1.

11. The power tool according to claim 1, wherein the controller is further configured to: generate the amplitude limiting parameter of the terminal voltage of the electric motor according to a difference between the real-time load data and the first load limit when the real-time load data exceeds the first load limit.

12. The power tool according to claim 11, wherein the controller is further configured to stop generating the amplitude limiting parameter of the terminal voltage of the electric motor when the real-time load data is lower than a second load limit, and the second load limit is less than the first load limit.

13. The power tool according to claim 12, wherein the first load limit is determined according to a stall protection load value and/or an overcurrent protection load value.

14. The power tool according to claim 12, wherein the amplitude limiting parameter of the terminal voltage of the electric motor comprises at least one of an amplitude limiting coefficient of the terminal voltage of the electric motor, a reduction value of the terminal voltage of the electric motor, and an amplitude limiting value of the terminal voltage of the electric motor.

15. The power tool according to claim 1, wherein when the real-time load data includes two or more of the actual bus current, the actual temperature of the electric motor, the actual rotational speed of the electric motor, and the actual power of the electric motor, the amplitude limiting parameter is determined according to various real-time load data, the amplitude limiting voltages of the terminal voltage of the electric motor determined according to the amplitude limiting parameters is compared, and the minimum amplitude limiting voltage is used as the control standard for the terminal voltage of the electric motor.

## Amended claims

### Amended claims in accordance with Rule 137(2) EPC.

1. A power tool (20), comprising:
a housing (21);
a working head (22);
an electric motor (15) disposed in the housing and configured to drive the working head;
a load detection unit (14) configured to detect real-time load data of the power tool; and
a controller (11) electrically connected to at least the load detection unit,
wherein the controller is configured to:
acquire the real-time load data outputted by the load detection unit;
generate an amplitude limiting parameter of a terminal voltage of the electric motor according to the real-time load data and a first load limit; and
adjust the terminal voltage of the electric motor based on the amplitude limiting parameter of the terminal voltage of the electric motor;
**characterized in that**
the load detection unit comprises a bus current detection unit configured to detect an actual bus current; and the controller is further configured to: acquire the actual bus current outputted by the bus current detection unit; and determine the amplitude limiting parameter of the terminal voltage of the electric motor according to the actual bus current and a first current threshold so as to cause the actual bus current to approach the first current threshold.

2. The power tool according to claim 1, wherein the load detection unit comprises at least one of a bus current detection unit, a temperature detection unit, a rotational speed detection unit, and a power detection unit.

3. The power tool according to claim 2, wherein the controller is further configured to determine the amplitude limiting parameter of the terminal voltage of the electric motor according to the first current threshold and the actual bus current based on a first closed-loop control model.

4. The power tool according to claim 2, wherein when the actual bus current is greater than the first current threshold, an amplitude limiting voltage of the terminal voltage of the electric motor determined according to the amplitude limiting parameter of the terminal voltage of the electric motor is less than a maximum allowable voltage of the terminal voltage of the electric motor; and when the actual bus current is less than or equal to the first current threshold, the amplitude limiting voltage of the terminal voltage of the electric motor determined according to the amplitude limiting parameter of the terminal voltage of the electric motor is equal to the maximum allowable voltage of the terminal voltage of the electric motor.

5. The power tool according to claim 1, wherein the first current threshold is determined according to a control target of the electric motor.

6. The power tool according to claim 1, wherein the controller is further configured to: determine an amplitude limiting voltage of the terminal voltage of the electric motor according to the amplitude limiting parameter of the terminal voltage of the electric motor; and adjust the terminal voltage of the electric motor to cause the terminal voltage of the electric motor to be less than or equal to the amplitude limiting voltage.

7. The power tool according to claim 6, wherein the load detection unit comprises a bus current detection unit, the real-time load data comprises an actual bus current, and the first load limit is a first current threshold.

8. The power tool according to claim 7, wherein when the actual bus current is greater than the first current threshold, the amplitude limiting voltage of the terminal voltage of the electric motor determined according to the amplitude limiting parameter of the terminal voltage of the electric motor is less than a maximum allowable voltage of the terminal voltage of the electric motor; and when the actual bus current is less than or equal to the first current threshold, the amplitude limiting voltage of the terminal voltage of the electric motor determined according to the amplitude limiting parameter of the terminal voltage of the electric motor is equal to the maximum allowable voltage of the terminal voltage of the electric motor.

9. The power tool according to claim 1, wherein the amplitude limiting voltage of the terminal voltage of the electric motor is U0, and a maximum allowable voltage of the terminal voltage of the electric motor is U1, wherein 10% * U1 ≤ U0 ≤ 100% * U1.

10. The power tool according to claim 1, wherein the controller is further configured to: generate the amplitude limiting parameter of the terminal voltage of the electric motor according to a difference between the real-time load data and the first load limit when the real-time load data exceeds the first load limit.

11. The power tool according to claim 10, wherein the controller is further configured to stop generating the amplitude limiting parameter of the terminal voltage of the electric motor when the real-time load data is lower than a second load limit, and the second load limit is less than the first load limit.

12. The power tool according to claim 11, wherein the first load limit is determined according to a stall protection load value and/or an overcurrent protection load value.

13. The power tool according to claim 11, wherein the amplitude limiting parameter of the terminal voltage of the electric motor comprises at least one of an amplitude limiting coefficient of the terminal voltage of the electric motor, a reduction value of the terminal voltage of the electric motor, and an amplitude limiting value of the terminal voltage of the electric motor.

14. The power tool according to claim 1, wherein when the real-time load data includes two or more of the actual bus current, the actual temperature of the electric motor, the actual rotational speed of the electric motor, and the actual power of the electric motor, the amplitude limiting parameter is determined according to various real-time load data, the amplitude limiting voltages of the terminal voltage of the electric motor determined according to the amplitude limiting parameters is compared, and the minimum amplitude limiting voltage is used as the control standard for the terminal voltage of the electric motor.
